# EUROPEAN PATENT APPLICATION

(11) **EP 2 813 919 A1**
(43) Date of publication of application: **17.12.2014**
(21) Application number: 14167986.0
(22) Date of filing: 12.05.2014
(51) Int. Cl.: G06F 1/32

(54) **Communication device and frequency control method**

(30) Priority: 10.06.2013 JP 2013122181
(71) Applicant: FUJITSU LIMITED, Kawasaki-shi, Kanagawa 211-8588 (JP)
(72) Inventor: Muso, Takuya, Kawasaki-shi, Kanagawa 211-8588 (JP)
(74) Representative: Wilding, Frances Ward

(57) **Abstract**

A communication device includes a first circuit configured to communicate with another communication device and generate first information that indicates whether or not the first circuit is performing communication with the another communication device, and a second circuit that includes a processor configured to control the first circuit, and control an operation frequency of the processor based on the first information.

## Description

### TECHNICAL FIELD

The embodiments discussed herein are related to a communication device and a frequency control method.

### BACKGROUND ART

In a related art, there is a technology by which a frequency of a central processing unit (CPU) is controlled based on a software operation state of a host processor in a mobile terminal in order to achieve power conservation in the mobile terminal.

For example, a technique is known by which the type of a software application being processed and executed by a digital signal processor is monitored, and an operation frequency of the digital signal processor is switched based on the type of the application. As the related art, such a technique is discussed in Japanese Laid-open Patent Publication No. 2000-4270.

### SUMMARY

### TECHNICAL PROBLEM

However, in the above-described related art, it is difficult to determine an accurate communication state of a modem in the host processor, so that it is difficult to control the frequency of the CPU of the host processor based on the communication state of the modem and suppress the power consumption.

### SOLUTION TO PROBLEM

According to an embodiment of an aspect of the invention, a communication device includes a first circuit configured to communicate with another communication device and generate first information that indicates whether or not the first circuit is performing communication with the another communication device, and a second circuit that includes a processor configured to control the first circuit, and control an operation frequency of the processor based on the first information.

### ADVANTAGEOUS EFFECTS OF INVENTION

It is desirable to provide a mobile terminal and a frequency control method in which power consumption may be suppressed.

### BRIEF DESCRIPTION OF DRAWINGS

FIGs. 1A and 1B are diagrams illustrating an example of a mobile terminal according to a first embodiment and an example of a flow of a signal in the mobile terminal;
FIG. 2 is a diagram illustrating an example of a mobile terminal according to a second embodiment;
FIG. 3 is a diagram illustrating an example of a hardware structure;
FIG. 4 is a diagram illustrating an example of a control table;
FIG. 5 is a flowchart illustrating an example of processing by a CPU control unit;
FIG. 6 is a flowchart illustrating an example of processing of a radio resource control (RRC) connection control unit;
FIGs. 7A, 7B and 7C are sequence diagrams illustrating examples of an operation of the mobile terminal;
FIG. 8 is a diagram illustrating an example of a flow of a signal in a mobile terminal according to a third embodiment; and
FIG. 9 is a flowchart illustrating an example of processing of an RRC connection control unit according to a fourth embodiment.

### DESCRIPTION OF EMBODIMENTS

A mobile terminal and a frequency control method according to embodiments are described in detail below with reference to drawings.

### (First embodiment)

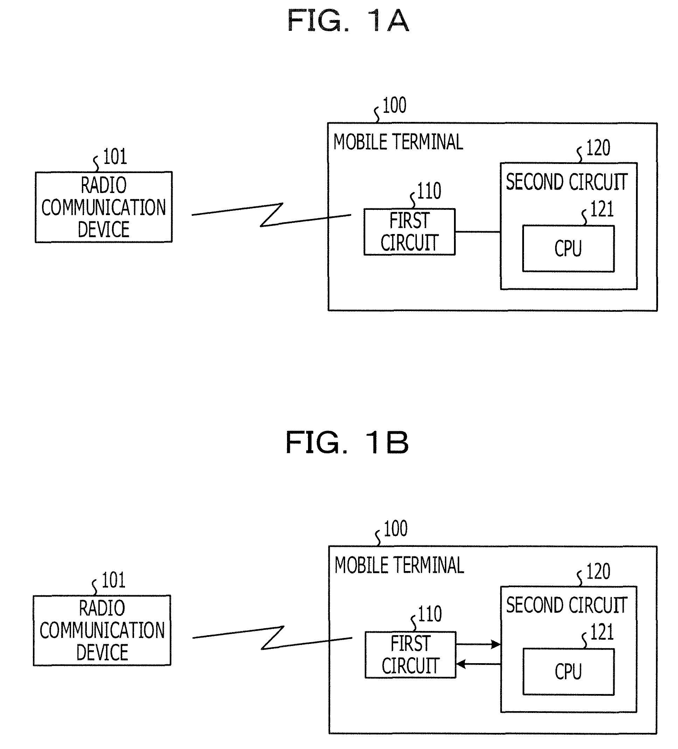

FIG. 1A is a diagram illustrating an example of a mobile terminal according to a first embodiment. FIG. 1B is a diagram illustrating an example of a flow of a signal in the mobile terminal illustrated in FIG. 1A. As illustrated in FIGs. 1A and 1B, a mobile terminal 100 according to the first embodiment performs radio communication with a radio communication device 101. The radio communication device 101 is, for example, a base station. The mobile terminal 100 includes a first circuit 110 and a second circuit 120.

The first circuit 110 performs radio communication with the radio communication device 101. The first circuit 110 may be a modem including a control unit that controls the radio connection with the radio communication device 101. The first circuit 110 outputs, to the second circuit 120, first information that indicates whether or not the radio communication with the radio communication device 101 is being performed.

The first information may indicate whether or not a communication resource for the radio communication between the radio communication device 101 and the mobile terminal 100 is assigned by the radio communication device 101. As an example, the first information indicates a state of RRC connection between the radio communication device 101 and the mobile terminal 100.

The second circuit 120 includes a CPU 121. The CPU 121 executes a program that is used to perform communication with the radio communication device 101 through the first circuit 110. The second circuit 120 controls an operation frequency of the CPU 121 based on the first information that is output from the first circuit 110. For example, the second circuit 120 controls the frequency of the CPU 121 based on correspondence information that associates the frequency of the CPU 121 with a state of the radio communication between the radio communication device 101 and the mobile terminal 100. For example, when the first circuit 110 is performing the radio communication with the radio communication device 101, the second circuit 120 raises the frequency of the CPU 121 as compared with a case in which the first circuit 110 does not perform the radio communication with the radio communication device 101.

As described above, when the first circuit 110 notifies the second circuit 120 whether or not the radio communication with the radio communication device 101 is being performed, the presence or absence of communication with the radio communication device 101 may be accurately associated with the frequency of the CPU 121 in the second circuit 120.

Therefore, when a time period in which the frequency of the CPU 121 is raised is set longer while the first circuit 110 is performing radio communication with the radio communication device 101, delay of the radio communication of the first circuit 110 due to operation delay of the CPU 121 may be suppressed. In addition, when a time period in which the frequency of the CPU 121 is lowered is set longer while the first circuit 110 is not performing radio communication with the radio communication device 101, the power consumption in the second circuit 120 may be reduced.

The second circuit 120 outputs to the first circuit 110 the second information that is used to determine a state of the CPU 121. The state of the CPU 121 means, for example, whether the CPU 121 is activated or in a standby mode such as a sleep mode. For example, the CPU 121 becomes in the standby mode when the user does not use the mobile terminal 100. The CPU 121 in the standby mode is activated and returned from the sleep mode when the first information is output from the first circuit 110.

The mobile terminal 100 includes a display that displays a screen for the user. Here, it is assumed that the state of the CPU 121 is switched based on a state of the display. In this case, the second information that may be used to determine the state of the CPU 121 may indicate whether or not the display is in the active state. However, the second information is not limited to such an example, and may be used to directly or indirectly determine the active state of the CPU 121.

The first circuit 110 determines the state of the CPU 121 of the second circuit 120 based on the second information output from the second circuit 120. In addition, the first circuit 110 outputs the first information to the second circuit 120 when the first circuit 110 determines that the CPU 121 is activated, and the first circuit 110 does not output the first information to the second circuit 120 when the first circuit 110 determines that the CPU 121 is not activated.

As described above, when the CPU 121 is in the standby mode (sleep mode), the first information that indicates whether or not radio communication with the radio communication device 101 is being performed is not notified from the first circuit 110 to the second circuit 120. As a result, it is suppressed that the CPU 121 returns to the active state (the sleep mode is released), and the power consumption in the second circuit 120 may be suppressed.

In addition, when the CPU 121 is in the standby mode, it is highly probable that the user does not use the mobile terminal 100. Therefore, user convenience does not decrease even when the frequency of the CPU 121 is not accurately controlled based on the accurate presence or absence of the communication. In addition, when the frequency of the CPU 121 is lowered, the power consumption in the second circuit 120 may be suppressed. Note that there is communication by an application that is operating in the background even if the user does not use the mobile terminal 100.

The programs to be executed by the CPU 121 may include specific programs that are used by a user to perform communication through the first circuit 110. As an example, the specific programs include a web browser that is used to browse a web page, a browsing application of a streaming video, and the like. The second circuit 120 may control the frequency of the CPU 121 based on a combination of the active state of the specific program and the radio communication state indicated by the first information.

The second circuit 120 controls the frequency of the CPU 121 based on correspondence information that associates the frequency of the CPU 121 with the combination of the state of the specific program and the radio communication state between the radio communication device 101 and the mobile terminal 100.

As a result, the frequency of the CPU 121 may be controlled based on the current status of the mobile terminal 100, for example, based on whether or not an operation or browsing is performed. Therefore, when the mobile terminal 100 is being used by the user, the frequency of the CPU 121 is raised to increase the operation speed of the mobile terminal 100, and when the mobile terminal 100 is not being used by the user, the frequency of the CPU 121 is lowered to suppress the power consumption of the mobile terminal 100.

### (Second embodiment)

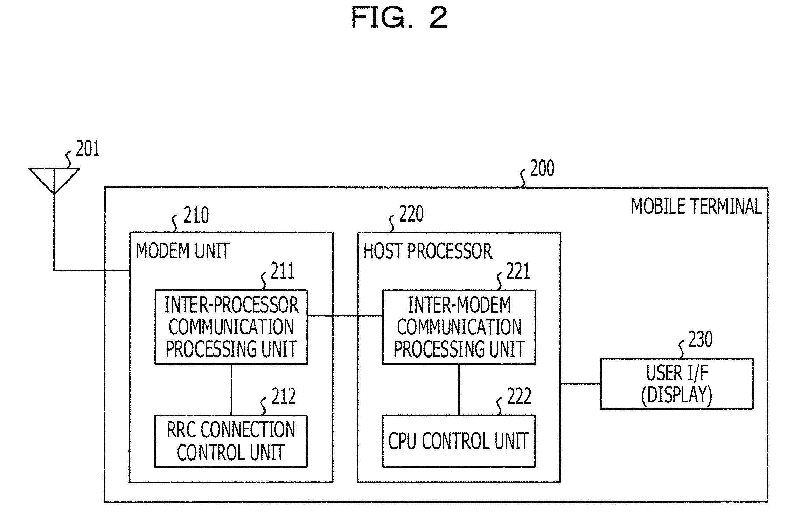

FIG. 2 is a diagram illustrating an example of a mobile terminal according to a second embodiment. As illustrated in FIG. 2, a mobile terminal 200 according to the second embodiment includes an antenna 201, a modem unit 210, a user I/F 230, and a host processor 220. The mobile terminal 200 may be a smart phone, a feature phone, and the like.

The modem unit 210 executes processing of radio communication, which is conducted by using the antenna 201, with a further radio communication device under the control of the host processor 220. The modem unit 210 includes a radio frequency integrated circuit (RFIC) that processes signals transmitted and received through the antenna 201 and base band-large scale integration (BB-LSI) that executes digital processing in the baseband.

In addition, the modem unit 210 includes an inter-processor communication processing unit 211 and an RRC connection control unit 212. The inter-processor communication processing unit 211 executes communication processing with the host processor 220. The RRC connection control unit 212 terminates RRC connection in radio communication with the further radio communication device. The RRC connection is in the lowest radio layer that is defined by 3rd Generation Partnership Project (3GPP).

The host processor 220 controls the modem unit 210. The host processor includes, for example, a CPU that executes an application to be used on the operation screen by the user. The host processor 220 also includes an inter-modem communication processing unit 221 and a CPU control unit 222. The inter-modem communication processing unit 221 executes communication processing with the modem unit 210. The CPU control unit 222 controls the operation frequency of the CPU of the host processor that is a subjective component of the inter-modem communication processing unit 221.

In the mobile terminal 200, as an interface that is used when the RRC connection state is notified from the modem unit 210 to the host processor 220, the inter-processor communication processing unit 211 and the inter-modem communication processing unit 221 are provided. In addition, the CPU control unit 222 of the host processor 220 controls the frequency of the CPU of the host processor 220 based on the state of RRC connection that is terminated by the RRC connection control unit 212 of the modem unit 210. As a result, the frequency of the CPU of the host processor 220 may be accurately controlled in response to the packet communication state.

The user I/F 230 is an interface that includes an input device that receives an input by the user and an output device that outputs information to the user. The input device may be a keyboard, a remote controller, and the like. The output device may be a display, a speaker, and the like. The input device and the output device may be a touch panel. The user I/F 230 is controlled, for example, by the CPU of the host processor 220. Note that the user I/F 230 of the mobile terminal 200 includes a display.

The mobile terminal 100 illustrated in FIGs. 1A and 1B may be realized by using the mobile terminal 200 and the like. The first circuit 110 illustrated in FIGS. 1A and 1B may be realized by using the modem unit 210 and the like. The second circuit 120 illustrated in FIGs. 1A and 1B may be realized by using the host processor 220 and the like. The CPU 121 illustrated in FIGs. 1A and 1B may be, for example, the CPU of the host processor 220.

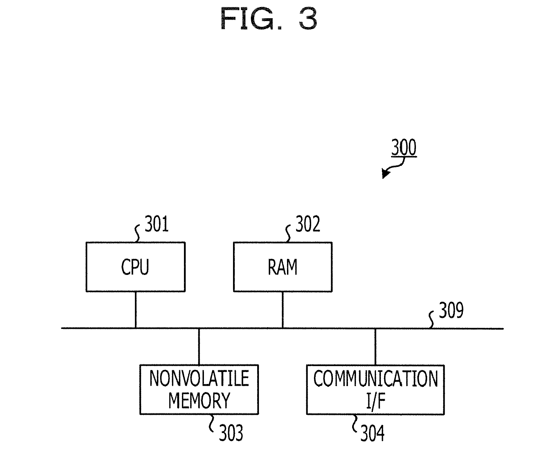

FIG. 3 is a diagram illustrating an example of a hardware structure. The host processor 220 illustrated in FIG. 2 may be realized by using an information processing device 300 illustrated in FIG. 3. The information processing device 300 includes a CPU 301, a random access memory (RAM) 302, a nonvolatile memory 303, and a communication I/F 304. The CPU 301, the RAM 302, the nonvolatile memory 303, and the communication I/F 304 are connected to each other through a bus 309.

The CPU 301 controls the whole information processing device 300. The RAM 302 is used as a work area of the CPU 301. The nonvolatile memory 303 may be a magnetic disk and a flash memory, for example. In the nonvolatile memory 303, various programs that operate the information processing device 300 are stored. The programs stored in the nonvolatile memory 303 are loaded into the RAM 302 and executed by the CPU 301.

The communication I/F 304 performs communication with the outside of the information processing device 300. The communication I/F 304 is controlled by the CPU 301.

The inter-modem communication processing unit 221 illustrated in FIG. 2 may be realized by using the CPU 301, the communication I/F 304, and the like. The CPU control unit 222 illustrated in FIG. 2 may be realized by using the CPU 301. Note that the CPU control unit 222 controls a frequency of the CPU 301.

In addition, the modem unit 210 illustrated in FIG. 2 may be also realized by using the information processing device 300 illustrated in FIG. 3. In this case, the communication I/F 304 includes a baseband processing circuit that performs coding, modulation, demodulation, and decoding of a signal under the control of the CPU 301, and an RFIC that performs as an interface between the baseband processing circuit and the antenna 201.

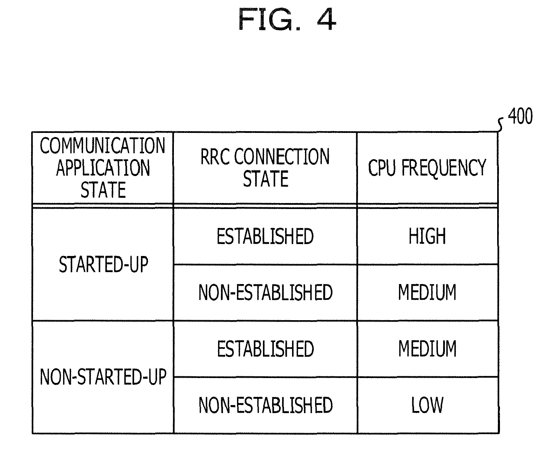

FIG. 4 is a diagram illustrating an example of a control table. In the host processor 220 illustrated in FIG. 2, for example, a control table 400 illustrated in FIG. 4 is stored. For example, the control table 400 is stored in the RAM 302 or the nonvolatile memory 303 illustrated in FIG. 3.

In the control table 400, a CPU frequency is associated with each combination of a communication application state and an RRC connection state. The communication application state means a active state or a non-active state of a communication application such as a browser in the host processor 220. The RRC connection state means an established state or a non-established state of RRC connection in the mobile terminal 200.

The CPU frequency is a frequency of the CPU of the host processor 220, for example, a frequency of the CPU 301. In the example of FIG. 4, the CPU frequency corresponds to one of "high", "medium", and "low". Here, "high", "medium", and "low" indicate different frequencies or frequency ranges.

The CPU control unit 222 determines the communication application state based on an execution state of the application in the host processor 220. The CPU control unit 222 also determines the RRC connection state from the modem unit 210. Then, the CPU control unit 222 determines a CPU frequency by using the control table 400 describing combinations of the communication application states and RRC connection states, and sets the frequency of the CPU 301 to the determined CPU frequency.

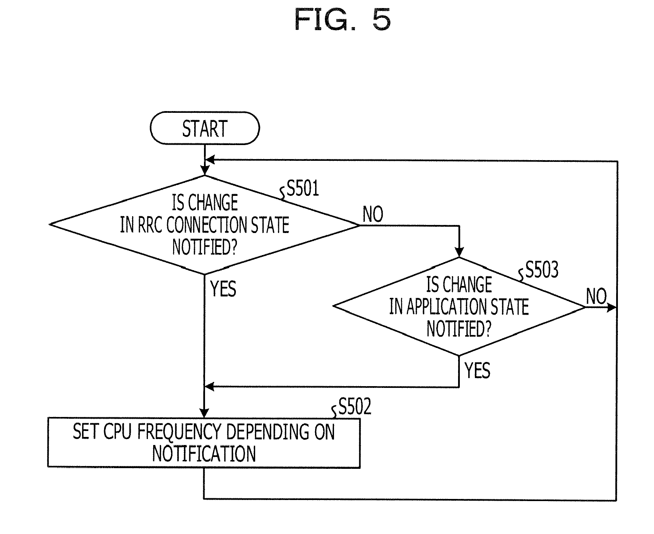

FIG. 5 is a flowchart illustrating an example of processing to be executed by the CPU control unit. The CPU control unit 222 of the host processor 220 executes, for example, each step illustrated in FIG. 5. The CPU control unit 222 determines whether or not change in the RRC connection state is notified from the modem unit 210 (Step S501). The notification of change in the RRC connection state is, for example, RRC connection establishment notification that indicates that RRC connection is established, or RRC connection release notification that indicates that RRC connection is released.

In Step S501, when the CPU control unit 222 determines that the change in the RRC connection state is notified from the modem unit 210 (Yes in Step S501), the CPU control unit 222 sets the frequency of the CPU 301 based on the notification (Step S502). For example, the CPU control unit 222 determines a CPU frequency by using the control table 400 that describes combinations of the stored application states and the changed RRC connection states that are indicated by the notification, and sets the frequency of the CPU 301 to the determined CPU frequency. In addition, the CPU control unit 222 stores the changed RRC connection state that is indicated by the notification, and the flow returns to Step S501.

In Step S501, when the CPU control unit 222 determines that the change in the RRC connection state is not notified from the modem unit 210 (No in Step S501), the CPU control unit 222 determines whether or not change in the application state is notified from the execution unit of the application of the host processor 220 (Step S503). The notification of change in the application state is, for example, start-up notification that indicates start-up of a communication application such as a web browser, or termination notification that indicates termination of the communication application. When the CPU control unit 222 determines that the change in the application state is not notified from the execution unit of the application of the host processor 220 (No in Step S503), the flow returns to Step S501.

In Step S503, when the CPU control unit 222 determines that the change in the application state is notified from the execution unit of the application of the host processor 220 (Yes in Step S503), the flow proceeds to Step S502. In this case, for example, the CPU control unit 222 determines a CPU frequency by using the control table 400 describing combinations of the stored RRC connection states and the changed application states that are indicated by the notification, and sets the frequency of the CPU 301 to the determined CPU frequency. In addition, the CPU control unit 222 stores the changed application states that are indicated by the notification, and the flow returns to Step S501.

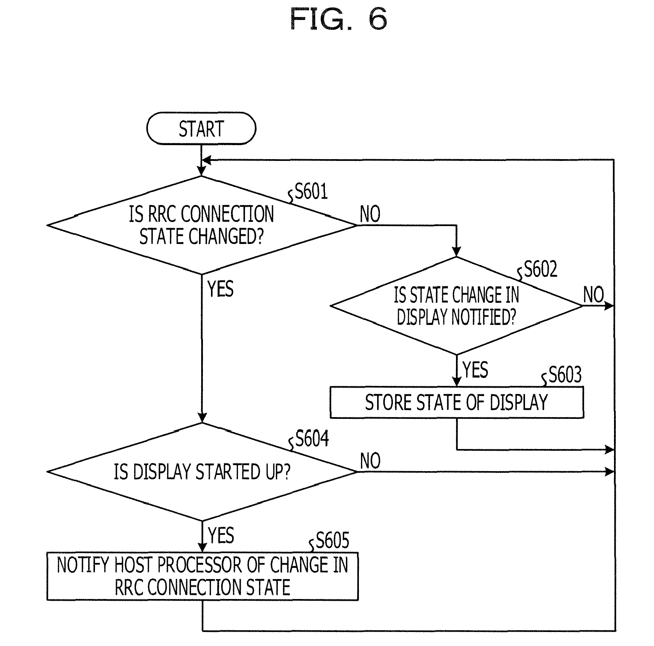

FIG. 6 is a flowchart illustrating an example of processing to be executed by the RRC connection control unit. The RRC connection control unit 212 of the modem unit 210 executes, for example, each step illustrated in FIG. 6 while executing terminal processing of the RRC connection. The RRC connection control unit 212 determines whether or not the RRC connection state is changed (Step S601).

In Step S601, when the RRC connection state is not changed (No in Step S601), the RRC connection control unit 212 determines whether or not state change in the display is notified from the host processor 220 (Step S602). The notification that indicates the state change in the display is, for example, display start-up notification that indicates start-up of the display of the mobile terminal 200, or display termination notification that indicates termination of the display of the mobile terminal 200.

In Step S602, when the RRC connection control unit 212 determines that state change in the display is not notified from the host processor 220 (No in Step S602), the flow returns to Step S601. When the RRC connection control unit 212 determines that state change in the display is notified from the host processor 220 (Yes in Step S602), the RRC connection control unit 212 stores the changed state of the display, which is indicated by the notification (Step S603), and the flow returns to Step S601.

In Step S601, when the RRC connection state is changed (Yes in Step S601), the RRC connection control unit 212 determines whether or not the display of the mobile terminal 200 is activated (Step S604). For example, the RRC connection control unit 212 may determine whether or not the display is activated based on the state that has been stored in Step S603.

In addition, when the processing of Step S604 is not yet executed, the RRC connection control unit 212 determines, for example, that the display is activated. When the RRC connection control unit 212 determines that the display is not activated (No in Step S604), the RRC connection control unit 212 does not notify the host processor 220 of the RRC connection state, and the flow returns to Step S601.

In Step S604, when the RRC connection control unit 212 determines that the display is activated (Yes in Step S604), the RRC connection control unit 212 notifies the host processor 220 of the change in the RRC connection state (Step S605), and the flow returns to Step S601.

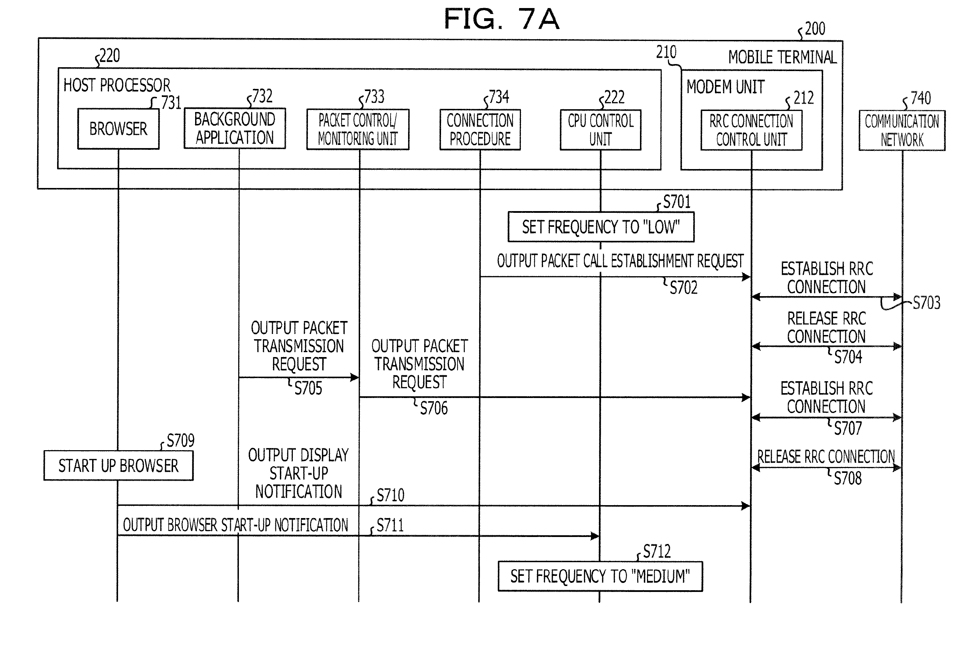

FIGs. 7A to 7C are sequence diagram illustrating examples of an operation of the mobile terminal. In FIGs. 7A to FIG. 7C, a browser 731 and a background application 732 are communication applications that are executed by the host processor 220. The browser 731 is activated through an operation of the user and performs communication. The background application 732 operates in the background regardless of an operation of the user, and performs communication automatically. In addition, the background application 732 may operate even in the sleep mode of the host processor 220.

A packet control/monitoring unit 733 is included in the host processor 220, and controls and monitors transmission and reception of a packet through the browser 731 and the background application 732. A connection procedure 734 is included in the host processor 220, and performs connection control to a communication network 740. The communication network 740 is a communication network to which the mobile terminal 200 is connected through radio communication, for example, a base station.

As illustrated in FIG. 7A, when the mobile terminal 200 is activated, the CPU control unit 222 sets the frequency of the CPU 301 to "low" (Step S701). The connection procedure 734 outputs, to the RRC connection control unit 212, a packet call establishment request that is used to request establishment of a packet call with the communication network 740 (Step S702).

Then, the RRC connection control unit 212 establishes RRC connection with the communication network 740 (Step S703). In addition, when the state between the mobile terminal 200 and the communication network 740 becomes a packet idle state, the RRC connection control unit 212 releases the RRC connection with the communication network 740 (Step S704). In Steps S703 and S704, the RRC connection state is changed, but the display of the mobile terminal 200 is not activated at this time, so that the RRC connection control unit 212 does not notify the host processor 220 of the change in the RRC connection state.

Next, it is assumed that the background application 732 outputs, to the packet control/monitoring unit 733, a packet transmission request that is used to request transmission of a packet to the communication network 740 (Step S705). Then, the packet control/monitoring unit 733 outputs the packet transmission request to the RRC connection control unit 212 (Step S706).

Then, the RRC connection control unit 212 establishes RRC connection with the communication network 740 (Step S707). In addition, the state between the mobile terminal 200 and the communication network 740 becomes the packet idle state, the RRC connection control unit 212 releases the RRC connection with the communication network 740 (Step S708). In Steps S707 and S708, the RRC connection state is changed, but the display of the mobile terminal 200 is not activated at this time, so that the RRC connection control unit 212 does not notify the host processor 220 of the change in the RRC connection state.

Next, it is assumed that the browser 731 is activated through an operation from the user of the mobile terminal 200 (Step S709), and that the display of the mobile terminal 200 is turned on along with the start-up of the browser 731. In this case, for example, the browser 731 outputs, to the RRC connection control unit 212, display start-up notification that indicates that the display is activated (Step S710). In addition, the browser 731 outputs, to the CPU control unit 222, browser start-up notification that indicates the browser is activated (Step S711).

Then, the CPU control unit 222 sets the frequency of the CPU 301 based on the RRC connection state and the browser start-up notification that is output in Step S711 (Step S712). In Step S712, the CPU control unit 222 determines that the application state corresponds to "activated", and the RRC connection state corresponds to "non-established" (initial value), and sets the frequency of the CPU 301 to "medium" (for example, see FIG. 4).

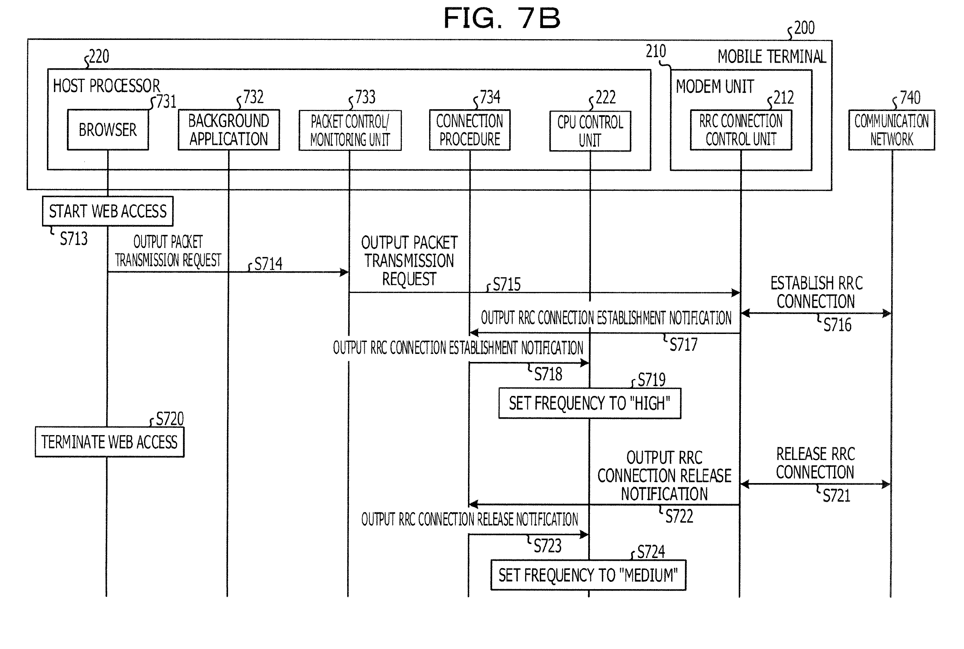

As illustrated in FIG. 7B, it is assumed that the browser 731 starts web access (Step S713). In this case, the browser 731 outputs, to the packet control/monitoring unit 733, a packet transmission request that is used to request transmission of a packet to the communication network 740 (Step S714). Then, the packet control/monitoring unit 733 outputs the packet transmission request to the RRC connection control unit 212 (Step S715).

Then, the RRC connection control unit 212 establishes RRC connection with the communication network 740 (Step S716). In Step S716, the RRC connection state is changed, and the RRC connection control unit 212 receives the display start-up notification in Step S710. Therefore, the RRC connection control unit 212 outputs, to the connection procedure 734, the RRC connection establishment notification that indicates that the RRC connection is established (Step S717).

Then, the connection procedure 734 outputs the RRC connection establishment notification to the CPU control unit 222 (Step S718). After that, the CPU control unit 222 sets the frequency of the CPU 301 based on the application state and the RRC connection establishment notification that is output in Step S718 (Step S719). In Step S719, the CPU control unit 222 determines that the application state corresponds to "activated", and the RRC connection state corresponds to "established", and sets the frequency of the CPU 301 to "high" (for example, see FIG. 4).

Next, it is assumed that the browser 731 terminates the web access (Step S720). When the state between the mobile terminal 200 and the communication network 740 becomes the packet idle state along with such termination, the RRC connection control unit 212 releases the RRC connection with the communication network 740 (Step S721). In Step S721, the RRC connection state is changed, and the RRC connection control unit 212 receives the display start-up notification in Step S710. Therefore, the RRC connection control unit 212 outputs the RRC connection release notification to the connection procedure 734 (Step S722).

Then, the connection procedure 734 outputs the RRC connection release notification to the CPU control unit 222 (Step S723). After that, the CPU control unit 222 sets the frequency of the CPU 301 based on the application state and the RRC connection release notification that is output in Step S723 (Step S724). In Step S724, the CPU control unit 222 determines that the application state corresponds to "activated", and the RRC connection state corresponds to "non-established", and sets the frequency of the CPU 301 to "medium" (for example, see FIG. 4).

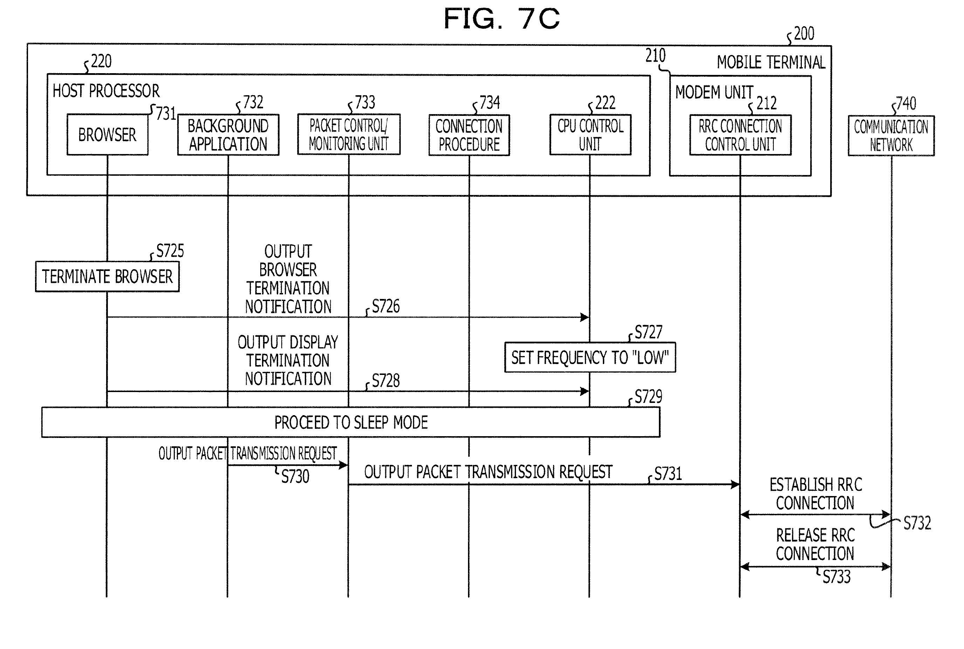

As illustrated in FIG. 7C, it is assumed that the browser 731 is terminated through an operation from the user of the mobile terminal 200 (Step S725). In this case, for example, the browser 731 outputs, to the CPU control unit 222, browser termination notification that indicates that the browser 731 is terminated, just before the termination (Step S726).

After that, the CPU control unit 222 sets the frequency of the CPU 301 based on the RRC connection state and the browser termination notification that is output in Step S726 (Step S727). In Step S727, the CPU control unit 222 determines that the application state corresponds to "non-stated-up", and the RRC connection state corresponds to "non-established", and sets the frequency of the CPU 301 to "low" (for example, see FIG. 4).

In addition, along with such termination of the browser 731, the display of the mobile terminal 200 is also terminated. In this case, for example, the browser 731 outputs, to the CPU control unit 222, display termination notification that indicates that the display is terminated (Step S728). Here, the display termination notification may be output through a further function that is achieved in the host processor 220 rather than the browser 731.

Next, for example, along with such termination of the display, it is assumed that the host processor 220 proceeds to the sleep mode (Step S729). In addition, in the sleep mode of the host processor 220, it is assumed that the background application 732 outputs, to the packet control/monitoring unit 733, a packet transmission request that is used to request transmission of a packet to the communication network 740 (Step S730). Then, the packet control/monitoring unit 733 outputs the packet transmission request to the RRC connection control unit 212 (Step S731).

Then, the RRC connection control unit 212 establishes RRC connection with the communication network 740 (Step S732). In addition, when the state between the mobile terminal 200 and the communication network 740 becomes the packet idle state, the RRC connection control unit 212 releases the RRC connection with the communication network 740 (Step S733).

In Steps S732 and S733, the RRC connection state is changed, but the CPU control unit 222 receives the display termination notification at this time. Therefore, the RRC connection control unit 212 does not notify the host processor 220 of the change in the RRC connection state. As a result, it may be avoided that the sleep mode in the host processor 220 is released by the communication of the background application 732.

As described above, in the mobile terminal 200 according to the second embodiment, when the RRC connection state is notified from the modem unit 210 to the host processor 220, the presence or absence of communication may be accurately associated with the frequency of the CPU 301. In addition, when the RRC connection state is not notified in the sleep mode of the host processor 220, it is avoided that the sleep mode of the host processor 220 is released, and the power consumption may be suppressed.

### (Third embodiment)

In a third embodiment, a portion that is different from the first embodiment is described below.

A structure of a mobile terminal 100 according to the third embodiment is similar to, for example, the structure of the mobile terminal 100 illustrated in FIG. 1A.

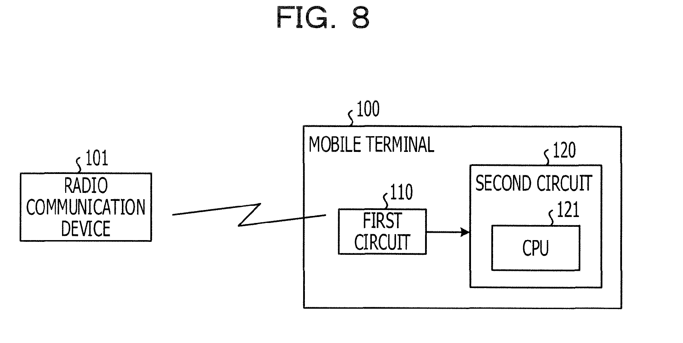

FIG. 8 is a diagram illustrating an example of a flow of a signal in the mobile terminal according to the third embodiment. In FIG. 8, the same symbol is assigned to a portion that is similar to the portion illustrated in FIG. 1B, and the description is omitted herein. As illustrated in FIG. 8, a second circuit 120 may not output, to a first circuit 110, second information that may be used to determine a state of a CPU 121. In addition, the first circuit 110 may not switch output and non-output of the first information based on the second information that is output from the second circuit 120.

In this case, when whether or not the first circuit 110 is performing radio communication with the radio communication device 101 is notified to the second circuit 120, the presence or absence of communication with the radio communication device 101 may be accurately associated with a frequency of the CPU 121 in the second circuit 120.

Therefore, while the first circuit 110 performs radio communication with the radio communication device 101, when a time period in which the frequency of the CPU 121 is raised is set longer, delay of the radio communication of the first circuit 110 due to operation delay of the CPU 121 may be suppressed. In addition, while the first circuit 110 does not perform radio communication with the radio communication device 101, when a time period in which the frequency of the CPU 121 is lowered is set longer, the power consumption in the second circuit 120 may be suppressed.

### (Fourth embodiment)

In a fourth embodiment, a portion that is different from the second embodiment is described below. A structure of a mobile terminal 200 according to the fourth embodiment is similar to, for example, the structure of the mobile terminal 200 illustrated in FIG. 2.

A host processor 220 according to the fourth embodiment may not output, to the modem unit 210, information that may be used to determine a state of a CPU of the host processor 220 such as the state of a display of the mobile terminal 200. In addition, an RRC connection control unit 212 of the modem unit 210 may notify the host processor 220 of an RRC connection state regardless of the state of the CPU of the host processor 220.

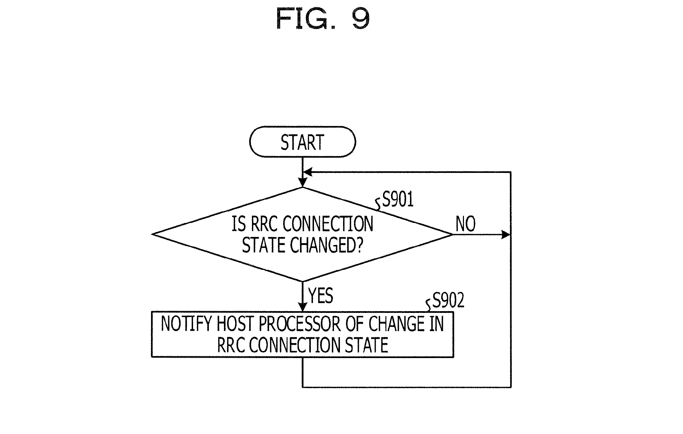

FIG. 9 is a flowchart illustrating an example of processing by the RRC connection control unit according to the fourth embodiment. The RRC connection control unit 212 of the modem unit 210 according to the fourth embodiment executes, for example, each step illustrated in FIG. 9 while executing terminal processing of RRC connection. The RRC connection control unit 212 determines whether or not the RRC connection state is changed (Step S901), and waits until the RRC connection state is changed (No is repeated in Step S901).

In Step S901, when the RRC connection state is changed (Yes in Step S901), the RRC connection control unit 212 notifies the host processor 220 of the change in the RRC connection state (Step S902), and the flow returns to Step S901.

As described above, in the mobile terminal 200 according to the fourth embodiment, when the RRC connection state is notified from the modem unit 210 to the host processor 220, the presence or absence of communication may be accurately associated with the frequency of the CPU 301.

As described above, in the mobile terminal and the frequency control method, the power consumption may be suppressed.

For example, in the related art, an accurate communication state in the modem unit 210 is not notified to the host processor 220. Therefore, the host processor 220 monitors the communication state, for example, by whether or not packet communication is performed within a certain time period. However, the packet communication corresponds to discontinuous operations in terms of a short time period, and a monitoring interval by the modem unit 210 may not correspond to change in the communication state of the modem unit 210, so that it is difficult to determine the communication state accurately in the modem unit 210.

Therefore, it is probable that inappropriate CPU control is performed by lowering the frequency of the CPU too much even when RRC connection is established and the communication is being performed, or by raising the frequency of the CPU excessively even when RRC connection is released and the communication is not performed.

In addition, generally, in the mobile terminal 200, for example, a unit that notifies the host processor 220 of a closed RRC connection state is provided in the modem unit 210, and the notified state may be considered for a decision condition of an operation condition of the host processor 220. Therefore, further appropriate CPU control may be achieved.

In addition, for example, information that depends on a state of the mobile terminal 200 such as a screen state of the host processor 220 may be notified to the modem unit 210 to determine, based on the state, whether or not notification of the state of RRC connection is performed. Therefore, it may be avoided that the host processor 220 is activated in the sleep mode.

In addition, when the state of the modem unit 210 is caused to correspond to the state of the host processor 220, for example, the frequency of the CPU, the unified CPU control may be performed as the operation of the mobile terminal 100. Therefore, occurrence of delay of processing may avoided that is caused when assignment of a resource of the host processor 220 is unnecessarily performed in a state in which radio communication is not performed, or assignment of a resource of the host processor 220 is not performed in a state in which communication is desired, and appropriate CPU control may be achieved.

## Claims

1. A communication device comprising:
a first circuit configured to communicate with another communication device and generate first information that indicates whether or not the first circuit is performing communication with the another communication device; and
a second circuit that includes a processor configured to control the first circuit, and control an operation frequency of the processor based on the first information.

2. The communication device according to claim 1, wherein
the second circuit is configured to generate second information that indicates an operation state of the processor, and
the first circuit is configured to transmit the first information to the second circuit based on the second information when the processor is in an active state.

3. The communication device according to claim 2, wherein
the first circuit does not transmit the first information to the second circuit based on the second information when the processor is not in the active state.

4. The communication device according to any preceding claim, wherein
the first information indicates whether or not a communication resource for the communication is assigned by the another communication device.

5. The communication device according to any preceding claim, wherein
the first information indicates a state of radio resource control connection.

6. The communication device according to any of claims 2 to 5, wherein
the processor transits to the active state when the processor receives the first information in a case in which the processor is not in the active state.

7. The communication device according to any of claims 2 to 6 further comprising:
a display, wherein
the operation state of the processor is switched based on a state of the display, and
the second information indicates whether or not the display is in an active state.

8. The communication device according to any preceding claim, wherein
the second circuit is configured to control the operation frequency of the processor based on correspondence information associating the operation frequency of the processor with the first information.

9. The communication device according to any preceding claim, wherein
the processor executes a program that is used to control the first circuit, and to perform communication through the first circuit by a user operation, and
the second circuit is configured to control the operation frequency of the processor based on an operation state of the program and the first information.

10. The communication device according to claim 9, wherein
the second circuit is configured to control the operation frequency of the processor based on correspondence information associating the operation frequency of the processor with the combination between the operation state of the program and the first information.

11. The communication device according to any preceding claim, wherein
the communication is radio communication.

12. The communication device according to any preceding claim, wherein
when the first circuit is performing the communication, the second circuit raises the operation frequency of the processor as compared with a case in which the first circuit is not performing the communication.

13. A frequency control method of a communication device that includes a first circuit that performs communication and a processor that controls the first circuit, the frequency control method comprising:
generating first information that indicates whether or not the first circuit is performing the communication; and
controlling an operation frequency of the processor based on the first information.

14. The frequency control method according to claim 13 further comprising:
generating second information that indicates an operation state of the processor; wherein
controlling of the operation frequency is performed based on the second information when the processor is in an active state.

15. The frequency control method according to claim 14, wherein
the first circuit does not output the first information based on the second information when the processor is not in the active state.
